# EUROPEAN PATENT SPECIFICATION

(11) **EP 2 256 630 B1**
(45) Date of publication and mention of the grant of the patent: **04.11.2015**
(21) Application number: 10164036.5
(22) Date of filing: 27.05.2010
(51) Int. Cl.: G06F 9/48

(54) **Method and system to perform time consuming follow-up process**
Verfahren und System zur Durchführung zeitintensiver Nachfolgeprozesse
Procédé et système pour effectuer un processus de suivi chronophage

(30) Priority: 27.05.2009 US 472610
(43) Date of publication of application: 01.12.2010
(73) Proprietor: SAP SE, 69190 Walldorf (DE)
(72) Inventor: Richter, Matthias, 69190, Walldorf (DE); Dominguez Anzuinelli, Gisella, 69190, Walldorf (DE)
(74) Representative: Richardt Patentanwälte PartG mbB

(56) References cited:
- US-A- 3 662 401
- TAKEYAMA H ET AL: "Design concept and implementation of mu ITRON specification for the H8/500 series", INTELLECTUAL LEVERAGE. SAN FRANCISCO, FEB. 27 - MAR. 3, 1989; [COMPUTER SOCIETY INTERNATIONAL CONFERENCE (COMPCON)], WASHINGTON, IEEE COMP. SOC. PRESS, US, vol. CONF. 34, 27 February 1989 (1989-02-27), pages 48-53, XP010014721, DOI: 10.1109/CMPCON.1989.301902 ISBN: 978-0-8186-1909-0
- TANENBAUM A S: "Modern Operating Systems, PROCESSES AD THREADS", MODERN OPERATING SYSTEMS, XX, XX, 1 January 2001 (2001-01-01), pages 71-73,81, XP002372417,

## Description

### Field of the Invention

The invention relates to computer systems, in particular to the scheduling of processes by database systems.

### Background and prior art

Within many applications running on a computer system, there may be actions initiated by a user that trigger a series of processes to be performed by the system. After a user has triggered a particular action, control is transferred to the system to perform the series of processes. Control of the system conventionally would not return to the user until all processes have been completed. The series of processes may need to be performed on a plurality of data objects within the computer system. During this time, the user of the system must wait until the series of processes has been completed by the system and control of the system is transferred back to the user interface.

In modern computing, users are likely to become dissatisfied with a delay while processes are being performed by the system. A delay of only a few seconds may seem inconvenient to some users. Therefore, it is desirable to optimize the period of time a user must wait for a series of processes to be performed by the system.

The conference proceeding "Design concept and implementation of µlTRON specification for the H8/500 series" by Takeyama et al. in COMPCON Spring '89. Thirty-Fourth IEEE Computer Society International Conference: Intellectual Leverage, Digest of Papers, 27 Feb-3 Mar 1989, pp. 48 - 53 discloses the interrupt controller for the H8/500 single chip microcontrollers.

In "Modern Operating Systems 2nd Ed." by Andrew S. Tanenbaum, Prentice Hall International, 2001, ISBN 978-0130313584, pages 282 to 287 discloses the principles of I/O software using the steps of printing a string to a printer as an example. The operating system copies a buffer with the string to an arran in kernel space. As soon as the printer is available the operating system copies a character to the printer's data register. The CPU will sit in an idle loop wating loop to output the next character. Interrrupts allow the CPU to do something else while waiting for the printer to become ready. The process that asked for the string to be printed is blocked until the entier string has printed.

United States patent US 3,662,401 discloses a computer system where the execution of individual programs is controlled by controlling their execution using program control instructions.

### Summary of the invention

The invention provides for a computer system, a computer-implemented method and an article comprising a computer-readable storage medium in the independent claims. Embodiments are given in the dependent claims.

Within an application there may be processes which are very time consuming. Because of this, a lot of data have to be created or updated. Some of this data could be described as secondary data. The term secondary data encompases data which is not necessary to process immediatly for a user task.

Users of a computer system dislike it when the waiting time until they can continue with the next user interaction. On the one hand the system may need to do a lot of work (for example data changes) which takes a long time and on the other hand the user does not want to wait a long time until the system gives control back for the next user interaction.

One embodiment of a method for performing the exection of processes given below. Primary and secondary work needs system time and after both work packages are done the control goes back to the user:
1) The user triggers a action on a object the user is working on, for example a Hiring object.
2) The user action needs time to execute its work or processes
3) The call has also to be delgated to secondary object/s which have to decide what have to be done here.
4) Now actions and data changes in the secondary objects are done.
5) Control goes back to the leading object
6) Control is given back to the user.

Embodiemts of the invention may allow time expensive secondary parts of work at a later point in time and is a pattern that can be used in general. An asynchronous program may be scheduled to do this in some embodiments. This means the user gets the control immediately back, after the program is scheduled. An embodiment of this is:
1) The user triggers a action on a object he is working on, for example a Hiring object.
2) The user action needs time for the work that has to done on the object he is currently working on.
3) The work which is needed to be done on secondary objects is not done immediately. The actions that needs to be done on secondary objects are registered on a scheduler for later execution..
4) Control is given back to the user.
5) Work on secondary objects is triggered with a time break in a parallel process

This method provides the possibility, that the trigger to do the secondary work can be given from the scheduled asynchronous program or alternatively from the user itself, if he does not want to wait for the program. To achieve this, the method is working with a status and with a action located at the leading object to be worked on. The status variable could be:
- SecondaryWorkFinished
   The allowed status values could be:
   - not needed
   - waiting
   - finished

The trigger to do the secondary work can come from the program that was scheduled asynchronously or if the user does not want to wait he can trigger the secondary parts of the work by himself. When later on the scheduled program indicates that secondary work is already done ( can be indicated if the status is already set to a value that indicates that nothing is to do), it will do nothing. The following picture shows this.

The action that can be called to trigger the process and set the status could be:
- FinishSecondaryWork

A object that wants to work with this pattern, may in some embodiemtns, do the following:
- Provide the status variable in the data part of the primary object, with the following possible values
   1) Nothing To do
   2) Waiting for Follow Up Processing
   3) Follow Up Processing Done.
- Control the status in the following way:
   ○ If a instance of the primary object exists the initial value for the SecondaryWorkFinisished status is NothingToDo.
   ○ As soon as the first time a follow up processing is needed, the status is set to WaitingFor FollowUpProcessing. For a object in this status, the application can decide which changes in the objects are allowed, until the follow up processing is done.
   ○ When the follow up processing is done, the status is set to FollowUpProcessingDone.
- Provide the action/method FinishSecondaryWork:
   This method/action can be called from the asynchronous program or from the user which is working from the User Interface (UI).

Embodimetns of the invention may also be applicable to object orientated computer programs and computer systems. In the descirption herein that references to processes encompass objects. For example, processes which are scheduled to be executed may the processes associated with an object.

In one aspect the invention provides for a computer system for the execution of processes. The computer system comprises a user interface means for receiving a request from a user. The request comprises data. In the case of an object the data in the request could be part of an object. The object could comprise both the data of the request and processes.

The request initiates execution of the processes and disables user control of the user interface means. As an example the user interface means may be a graphical user interface on a display of the computer system. The user may enter data or modify data using the graphical user interface. When the user is finished the user may click a button or other element on the graphical user interface and this sends a request which initiates execution of the processes and also disables control of the user interface means while the request of the processes are executed.

The computer system further comprises a dispatching means for dividing the processes into primary processes and secondary processes. The primary processes are processes which are performed immediately. The secondary processes may have their execution delayed by several seconds. The computer system further comprises a primary evaluation means for receiving the primary processes from the dispatching means and for executing the primary processes. The primary evaluation means may comprise a processor and/or memory.

The computer system further comprises a buffer means for receiving a subset of the data associated with the secondary processes from the dispatching means and for storing the subset of the data. The secondary processes are performed after the primary processes are. When the user used the interface means data may have been entered by the user using the interface means. Some of this data may be associated with the primary processes and some of the data may be associated with the secondary processes. As the secondary processes are evaluated later, the buffer means holds the data associated with the secondary processes until the secondary processes are executed. In some embodiments the buffer means may be a computer memory or a computer storage.

The computer system further comprises a job scheduling means for scheduling the execution of the secondary processes. The job scheduling means enables user control of the user interface after scheduling the execution of the secondary processes and after execution of the primary processes. Essentially the processes are divided into the primary processes and the secondary processes so that return of the user interface to the control of the user happens more rapidly than if control was returned after all of the processes were finished. The computer system further comprises a status handler means for enabling execution of the scheduled secondary processes. The status handler means may in some embodiments check to see if certain conditions are fulfilled before allowing execution of the scheduled secondary processes. For instance the status handler means in some embodiments may check to see if the primary processes are finished first or not. The computer system further comprises a secondary evaluation means for reading the subset of the data from the buffer means and for executing the secondary processes. The secondary evaluation means may also be a processor and/or computer system.

The advantage of such a computer system is that control of the user interface means is returned to the user more rapidly than if all of the processes are performed before control is returned. This is advantageous because the user may make more efficient use of the computer system. Secondary processes may be for instance processes which can be run at a later time such as updating records that the operator does not use directly. This facilitates use and operation of the computer system.

In another embodiment the computer system further comprises a database means. The database means may be in some embodiments a relational database. In other embodiments the database means may be any file or system for data storage and retrieval. The primary and secondary processes comprise instructions for performing operations on the database means. In other words the primary and secondary processes comprise instructions which are used for reading and/or writing data to the database means. This may include updating or changing a record. The status handler means enables execution of the scheduled secondary processes by setting the value of a status variable. As used herein a status variable may actually be a single status variable or it may also be a collection of status variables. A status variable should therefore be interpreted as possibly meaning more than one status variable. The status variable is stored in the database means. This embodiment is advantageous because storing the variables in the database means allows multiple processors or computers of the computer system to perform the primary and secondary processes. This allows a computer system which can operate efficiently and also to return control of the user interface to the user as efficiently as possible.

In another embodiment the primary means is adapted for receiving a primary subset of the data associated with the primary processes from the dispatching means. The dispatching means sends a scheduling request to the scheduling means to request scheduling of the secondary processes. The computer system further comprises controller means for routing the request to the dispatching means. The computer system furhter comprises metadata storage means for storing metadata which identifies each of the processes as either primary processes or a secondary process. The metadata storage means may explicitly identify which category each of the processes is in. The metadata storage means may also specify a process as being primary or secondary by the type of process. Similarly the dependency of a process on a different process may be used by the metadata storage means to identify a process as either being a primary or secondary process. The dependencies of processes on one another affect in which order they need to be executed. The dispatcher uses the metadata to divide the processes into the primary processes and the secondary processes.

The computer system further comprises execution means for triggering the execution of the scheduled secondary processes after a predetermined delay. The predetermined delay may be determined by a clock, it may also be determined by a delay caused by executing other processes. The computer system further comprises a secondary data handler means for reading the data from the buffer means and transferring the data to the secondary evaluation means. The secondary data handler requests execution of the secondary processes by the secondary evaluation means.

In another embodiment the computer system further comprises error handling means for receiving an error message from either the primary evaluation means or the secondary evaluation means. The error handler means is adapted for performing a predetermined error resolution strategy upon reception of the error message. This embodiment is advantageous because it allows error messages or errors in the data handling to be dealt with efficiently. In case of an error, the error handling means will receive the corresponding error information. In case of an error in the secondary data or the secondary evaluation means the error resolution strategy in one embodiment could be to send out a task to the user or to write the corresponding error into an error log. The secondary data may be stored in the database. Depending on the evaluation result of the status handler, the scheduler may be triggered to set the corresponding object or data status.

In another aspect, the invention provides for a computer-implemented method for delaying processes comprising: receiving by a system an instruction to perform an action on an object; identifying a set of processes associated with the action to be performed by the system; identifying a subset of primary processes from the set of processes associated with the action; identifying a subset of secondary processes from the set of processes associated with the action; scheduling by a scheduling manager an asynchronous process to perform the subset of secondary processes on the object; performing the subset of primary processes on the object; and performing the subset of secondary processes by the asynchronous process based upon the scheduling.

In another embodiment the subset of primary processes and the subset of secondary processes are identified by the scheduling manager.

In another embodiment, the subset of primary processes and the subset of secondary processes are identified based upon dependency information.

In another embodiment the asynchronous process to perform the subset of secondary processes is scheduled by the scheduling manager based upon system activity.

In another embodiment the asynchronous process to perform the subset of secondary processes is manually executed based upon received user input.

In another embodiment the method further comprises: identifying by an error manager a failed process from the set of processes associated with the action to be performed by the system; re-scheduling by the scheduling manager the failed process and any processes dependent from the failed process.

In another embodiment the error manager generates an error message if the failed process is identified a pre-determined number of times during the action to be performed by the system.

In another embodiment the object includes a follow-up process status identifier.

In another embodiment the follow-up process status identifier is updated by the scheduling manager based upon the status of the primary processes and the secondary processes.

A computer-readable storage medium as used herein is any storage medium which may store instructions which are executable by a processor of a computing device. The computer-readable storage medium may be a computer-readable non-transitory storage medium. The computer-readable storage medium may also be a tangible computer readable medium. In some embodiments, a computer-readable storage medium may also be able to store data which is able to be accessed by the processor of the computing device. An example of a computer-readable storage medium include, but are not limited to: a floppy disk, a magnetic hard disk drive, a solid state hard disk, flash memory, a USB thumb drive, Random Access Memory (RAM) memory, Read Only Memory (ROM) memory, an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network.

In another aspect, the invention provides for an article comprising a computer-readable storage medium including instructions that, when executed by a processor, perform the steps of: receiving by a system an instruction to perform an action on an object; identifying a set of processes associated with the action to be performed by the system; identifying a subset of primary processes from the set of processes associated with the action; identifying a subset of secondary processes from the set of processes associated with the action; scheduling by a scheduling manager an asynchronous process to perform the subset of secondary processes on the object; performing the subset of primary processes on the object; and performing the subset of secondary processes by the asynchronous process based upon the scheduling. The instructions may be a computer program product.

In another embodiment, the subset of primary processes and the subset of secondary processes are identified by a scheduling manager.

In another embodiment the subset of primary processes and the subset of secondary processes are identified based upon dependency information.

In another embodiment the asynchronous process to perform the subset of secondary processes is scheduled by the scheduling manager based upon system activity.

In another embodiment the asynchronous process to perform the subset of secondary processes is manually executed based upon received user input.

In another embodiment, the article further comprisesinstructions that, when executed by a processor, perform the steps of: identifying by an error manager a failed process from the set of processes associated with the action to be performed by the system; re-scheduling by the scheduling manager the failed process and any processes dependent from the failed process.

In another embodiment the error manager generates an error message if the failed process is identified a pre-determined number of times during the action to be performed by the system.

In another embodiment the object includes a follow-up process status identifier.

In another embodiment the follow-up process status identifier is updated by the scheduling manager based upon the status of the primary processes and the secondary processes.

In another aspect the invention provides for a computer system for delaying processes comprising: a processor to receive an instruction to perform an action on an object; a memory; and a scheduling manager stored on the memory, the scheduling manager to: identify a set of processes associated with the action to be performed by the system; identify a subset of primary processes from the set of processes associated with the action; identify a subset of secondary processes from the set of processes associated with the action; schedule an asynchronous process to perform the subset of secondary processes on the object; direct the processor to perform the subset of primary processes on the object; and direct the processor to perform the subset of secondary processes by the asynchronous process based upon the scheduling. Embodiments of this computer system are also applicable and are also embodiments of the previously described computer system.

In another embodiment the subset of primary processes and the subset of secondary processes are identified based upon dependency information.

In another embodiment the asynchronous process to perform the subset of secondary processes is scheduled by the schedule manager based upon system activity.

In another embodiment the asynchronous process to perform the subset of secondary processes is manually executed based upon received user input.

In another embodiment the system further comprises:
an error manager to identify a failed process from the set of processes associated with the action to be performed by the system; and the scheduling manager to re-schedule the failed process and any processes dependent from the failed process.

In another embodiment the object includes a follow-up process status identifier.

In another embodiment the follow-up process status identifier is updated by the scheduling manager based upon the status of the primary processes and the secondary processes.

### Brief description of the drawings

In the following preferred embodiments of the invention will be descrive in greater detail by way of example only making reference to the drawings in which:
FIG. 1 is a logic flow diagram illustrating one embodiment of a method for delaying time consuming follow-up processes,
FIG. 2 illustrates a user-interface for use in one embodiment,
FIG. 3 illustrates one embodiment of a data object,
FIG. 4 illustrates one embodiment of a system,
FIG. 5 illustrates a timing diagram,
FIG. 6 illustrates a user-interface for use in one embodiment,
FIG. 7 illustrates a user-interface for use in one embodiment,
FIG. 8 illustrates a computer system 800 according to an embodiment of the invention, and
FIG. 9 shows an block diagram which illustrates the logic used to operate a status handler according to an embodiment of the invention.

### Detailed Description

Like numbered elements in these figures are either equivalent elements or perform the same function. Elements which have been discussed previously will not necessarily be discussed in later figures if the function is equivalent.

Various embodiments disclose a method to perform time consuming follow-up processes asynchronously from user control. In one embodiment, a computer system may receive an instruction to perform an action representing a system transaction. A scheduling manager may identify a set of processes associated with the action that need to be performed by the computer system. A subset of primary processes and a subset of secondary processes may be identified from the set of processes associated with the action. The scheduling manager may schedule asynchronous processes to perform the subset of secondary processes on the object. The computer system may perform the subset of primary processes on the object directly in response to a user command. The subset of secondary processes may be performed by the asynchronous process based upon the scheduling by the scheduling manager.

In one embodiment, a user may trigger an action to be performed by the system.

For example, the user may want to hire a new employee using a human resources application of an enterprise management system. To enter a new employee into the system, a new hire action may need to be initiated. A new hire action may be coded in the system as a series of processes to be performed by the system, such as generating employee agreements, updating compensation data, creating a new user within the system and generating a time agreement. The series of processes may need to be performed on a plurality of data objects within the system, some of which could be quickly generated. The system may also store pre-identified primary and secondary classifications for the series of processes. Primary processes may be processes that the user requires to be performed synchronously. Secondary processes may be time-intensive processes that the user does not require to be completed immediately, for example. In addition, processes may be identified as primary or secondary based upon dependency information. In order to reduce the time required to return control of the system to the user after the hire action has been initiated, the secondary processes may be scheduled to be performed asynchronously.

In one embodiment, the scheduling manager may identify which processes should be designated as primary processes. Likewise, the scheduling manager may identify which processes should be designated as secondary processes. For example, the scheduling manager may identify processes as primary or secondary based upon dependency information or based upon system activity. System activity may include, but is not limited to, available processing power, memory availability or network bandwidth. In one embodiment, each process is classified as primary or secondary based upon the convenience of the user. The embodiments are not limited by this example.

In one embodiment, dependency information may be used to identify primary and secondary process by the scheduling manager. For example, a set of process may need to be performed based upon a triggered action. Some processes within the set of processes may depend upon the completion of other processes within the set of processes. Using dependency information, the scheduling managing may schedule processes that are not dependent upon other processes to be performed synchronously. Similarly, the scheduling manager may schedule processes that are dependent upon the completion of other processes asynchronously. The asynchronously scheduled processes may be scheduled to be completed dynamically based upon the completion of the synchronously scheduled processes. Alternatively, the asynchronously scheduled processes may be scheduled at a time after which the synchronously scheduled processes are known to have been completed.

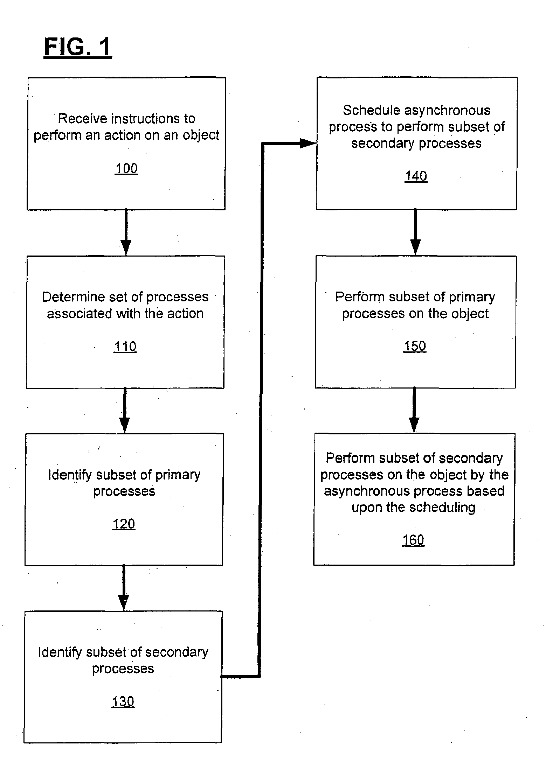

FIG. 1 illustrates one embodiment of the present invention. At block 100, an instruction is received to perform an action on an object. For example, a user may wish to hire a new employee by performing a new hire action in a computer system. When a new hire action is initiated, a plurality of processes may need to occur. The plurality of processes may need to be performed on a plurality of data objects within the computer system.

At block 110, a scheduling manager identifies a set of processes associated with the initiated action. The set of processes may include the generation of employment agreements, updating compensation data, creating a new user within a computer system and creating a new email address in the computer system, for example. Each process may be associated with a data object within the computer system. Some of these processes may be executed by the computer system relatively quickly. However, some processes may require significant processing time. In addition, some processes may be dependent upon the completion of other processes.

At block 120, a subset of primary processes is identified. The subset of primary processes may be identified by the scheduling manager within the system. The scheduling manager may access data within the system identifying primary processes. The data within the system may include dependency information. Primary processes may includes processes that the user requires immediately. Alternatively, the scheduling manager may identify a subset of primary processes based upon the estimated time required to complete each process. Using this information, the scheduling manager may identify a subset of primary processes. For example, processes required immediately, associated with a low estimated processing time or processes not dependent upon the completion of other processes may be identified as primary processes.

At block 130, a subset of secondary processes may be identified. As with the subset of primary processes, the scheduling manager may access data within the system identifying secondary processes. The data within the system may include dependency information. The dependency information may indicate which processes are dependent upon the completion of other processes. The scheduling manager may identify the subset of secondary processes based upon dependency information. In addition, secondary processes may include processes that the user does not require immediately and may be performed later. Further, the identification of secondary processes by the scheduling manager may be based upon the estimated time of each process to be completed. For example, processes that are not immediately required, that are associated with a high estimated time or are dependent upon other processes may be identified as secondary processes.

At block 140, the scheduling manager may schedule an asynchronous process to perform the subset of secondary processes. The asynchronous process may be scheduled at a time that is more convenient to the user. In one embodiment, the asynchronous process may be scheduled based upon system activity. For example, the asynchronous process may be scheduled during a time when the user will not be using the system or during a time when the user is working on another object and will not be affected by the secondary processes.

At block 150, the subset of primary processes are performed by the system. After the completion of the subset of primary processes, control of the computer system is returned to the user. In one embodiment, the object associated with the triggered action may include a follow-up process status identifier. The follow-up process status identifier may be updated to reflect the completion of the subset of primary processes. The follow-up process status identifier may also be updated to reflect that pending secondary processes associated with the initiated action have not been completed.

At block 160, the subset of secondary processes is performed based upon the scheduling done during block 140. The asynchronous process is used to perform the subset of secondary processes during the time period designated by the scheduling manager. In one embodiment, a follow-up process status identifier may updated to reflect the completion of the subset of secondary processes.

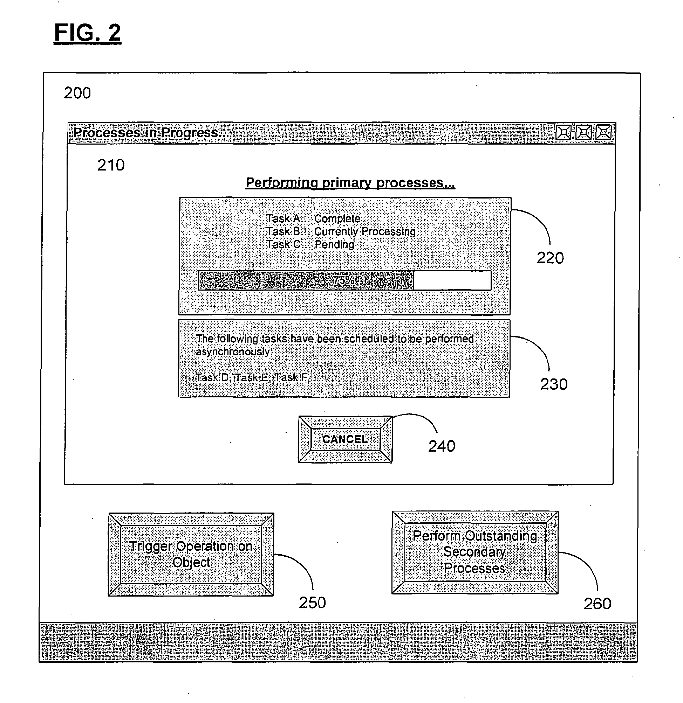

FIG. 2 illustrates a user interface 200 that may be used to perform the method as described by the logic flow illustrated within FIG. 1. User interface 200 may include several user interface elements capable of interaction with the user of a computer system. User interface 200 may be implemented using instructions that are stored on a computer-readable storage medium and executed by a processor.

In various embodiments, user interface 200 may include window 210. Window 210 may be a pop-up or notification window that appears after an operation has been triggered by the user. A user may trigger an operation by clicking button 250. Button 250 may allow a user to initiate a hire action, a termination action or other actions that are capable of being performed by the system. Alternatively, an operation may be triggered by the system. Window 210 may include various user interface elements. For example, window 210 may include user interface element 220. User interface element 220 may display information to the user regarding the status of primary processes being performed in response to a triggered operation on an object. As illustrated, user interface element 220 shows that task A has been completed, task B is currently processing and task C is pending. In addition, user interface element 220 may include a progress bar to indicate the progress of the primary processes.

In one embodiment, user interface 200 may include user interface element 230. User interface element 230 may be used to display secondary processes to a user. For example, user interface element 230 may list secondary processes to be performed asynchronously in response to a triggered operation on an object. As illustrated, task D, task E and task F have been scheduled to be performed asynchronously. In some situations, a user may wish to cancel the triggered operation. Button 240 may be used to direct the scheduling manager to abort the triggered operation on an object. User interface 200 may also include button 250. Button 250 may allo a user to trigger the operation on the object.

User interface 200 may also include button 260. Button 260 may allow a user to manually perform outstanding secondary processes. For example, the scheduling manager may have scheduled several subsets of secondary processes to performed at a later point in time. A user may decide to manually perform the outstanding secondary processes during a time that is convenient for the user. In one embodiment, in response to user interaction with button 260, a FINISH_FOLLOW_UP_PROCESS command may be initiated on all pending secondary processes. If a user chooses to manually perform the outstanding secondary processes, the scheduling manager may only perform the secondary processes that are not dependent upon other processes or whose parent processes have been successfully completed. If a secondary process has uncompleted parent processes, the scheduling manager may perform the secondary process as soon as all parent processes have been successfully completed.

In one embodiment, the steps performed by the scheduling manager are unknown to the user of a system. For example, after a user has triggered an operation to be performed by the system, the scheduling manager may schedule primary and secondary processes without informing the user. The primary and secondary processes may then be performed as scheduled by the scheduling manager in the background without displaying information to the user. The embodiments are not limited to this example.

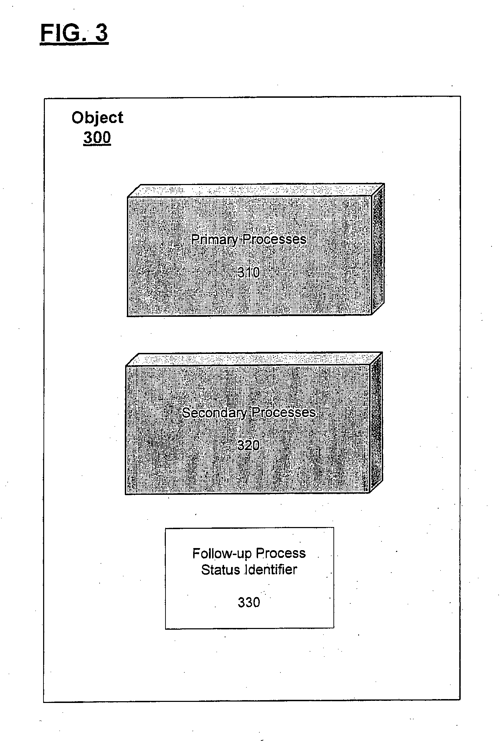

FIG. 3 illustrates an object 300 according to one embodiment. Object 300 may be a data object within an enterprise application. Object 300 may be implemented using instructions that are stored on a computer-readable storage medium and executed by a processor. Object 300 may include primary processes 310 and secondary processes 320. Primary processes 310 may include one or more primary objects. Similarly, secondary processes 320 may include one or more secondary objects. In various embodiments, primary processes 310 and secondary processes 320 may be pre-identified within object 300. Alternatively, primary processes 310 and secondary processes 320 may be identified by a scheduling manager after an action has been initiated on object 300.

Object 300 may include a follow-up process status identifier 330. For example, follow-up process status identifier 330 may indicate that the primary processes are completed, pending, currently being processed, no longer necessary, or waiting to be processed. In one embodiment, follow-up process status identifier 330 may updated to reflect the completion of the subset of primary processes. The follow-up process status identifier may also be updated to reflect that pending secondary processes associated with the initiated action have not been completed. For example, follow-up processes status identifier 330 may indicate that the secondary processes are completed, pending, currently being processed, no longer necessary, or waiting to be processed. In one embodiment, follow-up process status identifier 330 may updated to reflect the completion of the subset of secondary processes.

In various embodiments, when an action is initiated on object 300, an instance of a scheduling manager may be created that corresponds directly to object 300. The scheduling manager instance may be terminated when all processes, primary and secondary, have been performed by a computer system. In one embodiment, during the time that an instance of a scheduling manager is associated with object 300, a computer system may "lock" object 300 so that other scheduling manager instances may not be created to modify object 300. By "locking" object 300, the system may avoid potentially conflicting processes related to object 300. The embodiments are not limited by this example.

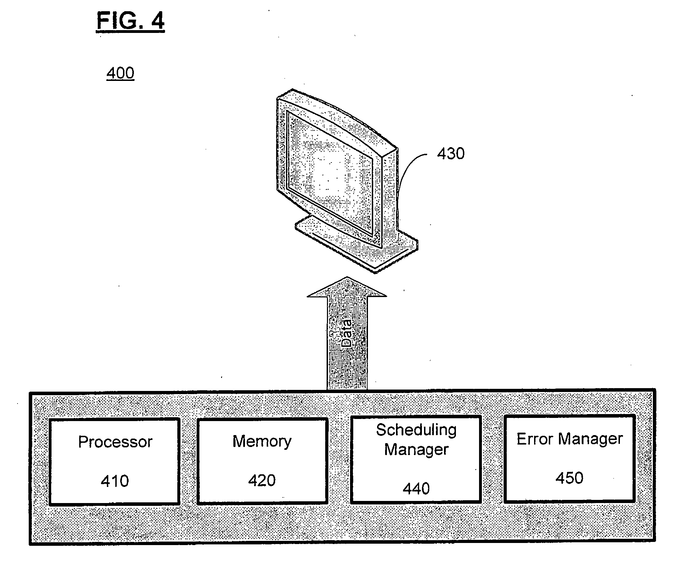

FIG. 4 illustrates a system according to one embodiment. System 400 may comprise processor 410, memory 420, display device 430 and scheduling manager 440. Processor 410 may be used to execute instructions stored on memory 420. Memory 420 may be a computer-readable storage medium used to store data and instructions. For example, memory 420 may be used to store an enterprise application. The embodiments are not limited to this example.

In various embodiments, system 400 includes scheduling manager 440. Scheduling manager 440 may be used to identify primary and secondary processes. Once primary processes and secondary processes are identified, scheduling manager 440 may schedule an asynchronous process to perform the identified secondary processes.

In various embodiments, system 400 includes error manager 450. Error manager 450 may monitor the progress of all processes being executed by a system, primary and secondary. Some processes, such as secondary processes, for example, may be dependent upon the successful completion of other processes, such as primary processes, for example. Error manager 450 may provide information to scheduling manager 440 regarding the successful completion of one or more processes by the system. Likewise, error manager 450 may identify failed processes. For example, if a process has not successfully completed, error manager 450 may inform scheduling manager 440 that a failed process has been identified. At that point, scheduling manager 440 may re-schedule the failed process and one or more processes that are dependent upon the failed process. If error manager 450 identifies the same process as a failed process multiple times, it may provide an error message to a technical user or system administrator. For example, the error manager 450 may provide an error message after a pre-determined number of failures of the same process. The error message may be sent via pop-up message, email, text message, phone or other communication medium known in the art. The error message may include as much information as possible about the nature and reasons for the failed process. In addition, the error message may include instructions on how to correct the cause of the failed process.

In various embodiment, system 400 may include display device 430. Display device 430 may be used to display information to a user of system 400. For example, display device 430 may be used to display user interface information to a user of system 400.

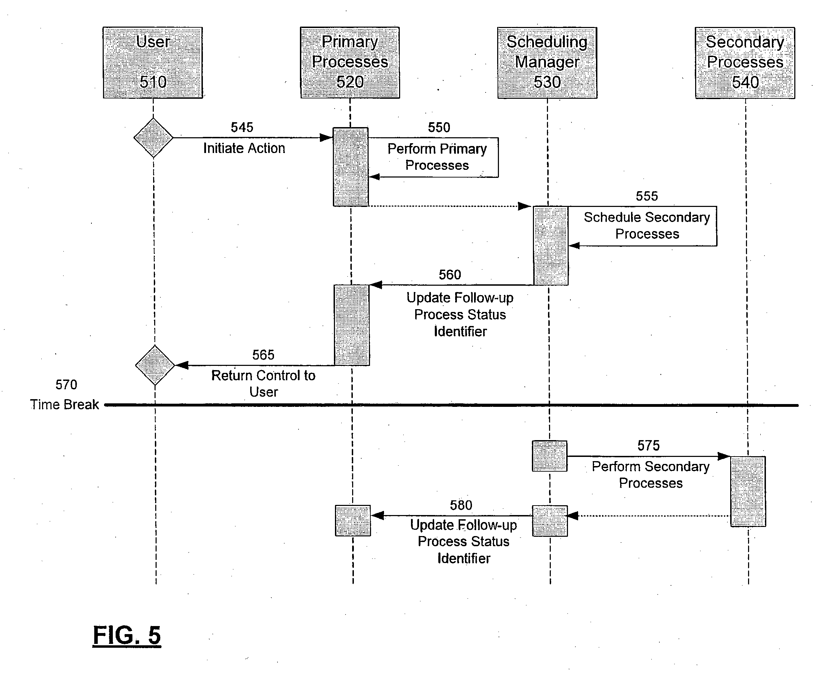

FIG. 5 illustrates a timing diagram according to one embodiment. As shown, user 510 may initiate an action at step 545. For example, user 510 may initiate a hire action within an enterprise application. The hire action may require a series of processes to be performed on one or more data objects. For example, each process may be identified as either a primary process or a secondary process. The identification of processes may be based upon data stored in a database or using scheduling manager 530.

At step 550, identified primary processes may be performed. Scheduling manager 530 may be responsible for scheduling secondary processes at step 555. Secondary processes may be scheduled by scheduling manager 530 based upon data stored in a database, such as dependency information. After the secondary processes have been scheduled by the scheduling manager 530, a follow-up process status identifier is updated by scheduling manager 530. At step 565, control of the system is returned to user 510.

In various embodiments, time break 570 may occur after control of the system has been returned to the user at step 565. Time break 570 may be a scheduled period of time or may be identified dynamically based upon the activity of a computer system. In one embodiment, time break 570 may be identified by scheduling manager 530. Further, time break 570 may be interrupted by a user initiated command to process pending secondary processes.

At step 575, scheduling manager 530 initiates the performance of the scheduled secondary processes. At step 580, scheduling manager 530 updates the follow-up process status identifier to reflect the completion of the scheduled secondary processes.

Figure 5 is a sequece diagram which shows the following; A User 510 does a change 545 to a Primary Object 520. The primary changes 550 of this object are executed immediately. All updates and creates necessary for secondary objects are now scheduled 555 asynchronously via calling the Schedule method for asynchronous Programs. This call leads to the planning of the asynchronous run in the system landscape. The primary Object now is setting 560 the FollowUpProcessingStatus to the value Waiting for Follow Up Processing. Now there is a time break 570 until the Asynchronous Program is started. After starting this program, it does the changes 575 to the secondary object/s and sets 580 afterwards the value of the FollowUpProcessingStatus to Follow Up Processing Done.

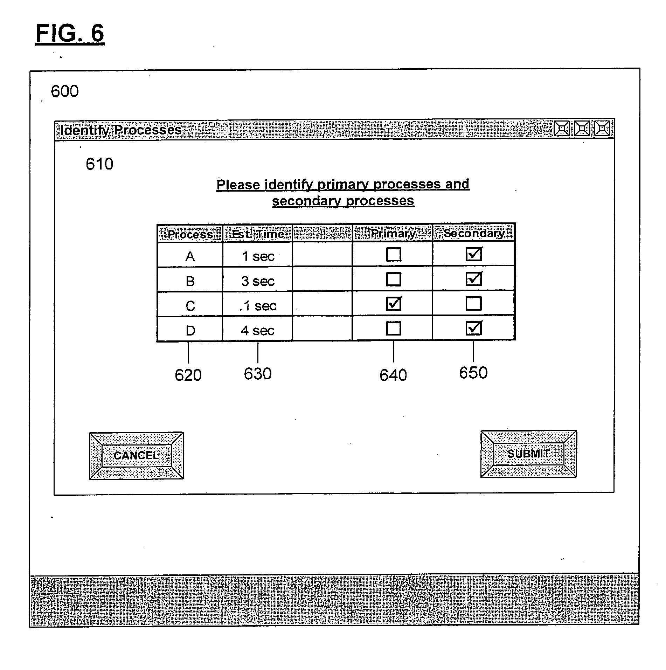

FIG. 6 illustrates a user interface 600 that may be used to perform the method as described by the logic flow illustrated within FIG. 1. User interface 600 includes several user interface elements capable of interaction with the user of a computer system. User interface 600 may be implemented using instructions that are stored on a computer-readable storage medium and executed by a processor.

User interface 600 may be used by a technical user or system administrator. User interface 600 includes window 610. Window 610 may be a window within an enterprise application. For example, window 610 may be a pop-up or notification window that appears after a user has interacted with another element of user interface 600.

In one embodiment, window 610 is used to collect settings related to a particular action. Once the settings are submitted to the system, the settings may be saved within a database. The saved settings may be automatically retrieved and applied to a data object when a user initiates a particular action in the future.

Window 610 includes several data elements that are presented to a user of the computer system. The user may be a technical user or system administrator. Data element 620 lists each process that is required to perform an action on a data object. Data element 630 lists the estimated time for each process to be completed. The estimated time may be computed based upon the execution of past processes or using an algorithm. Further, the data may be pre-delivered by the software system. Data element 640 includes a set of elements that may be chosen by the user. The set of elements illustrated in data element 640 are used to indicate that a corresponding process is a primary process. As shown, process C has been selected as a primary process. Similarly, data element 650 includes a set of elements that may be used to indicate that a process is a secondary process. As shown, processes A, B and D have been identified as secondary processes.

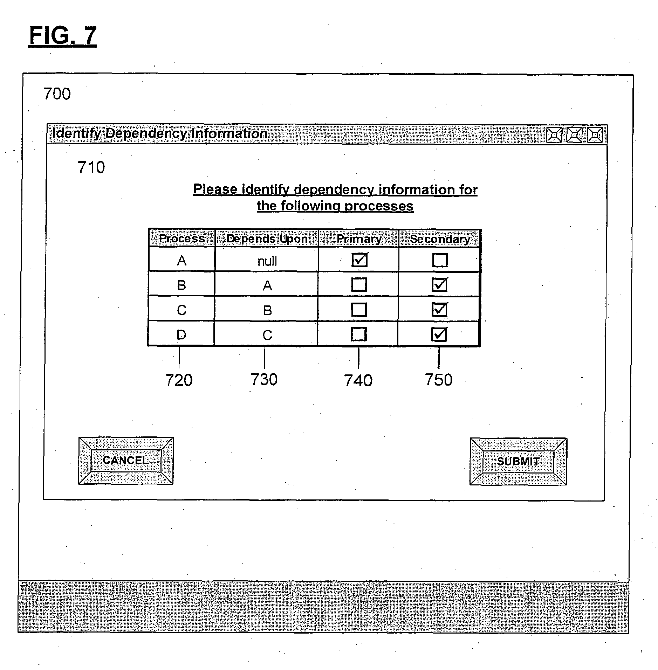

FIG. 7 illustrates a user interface 700 that may be used to perform the method as described by the logic flow illustrated within FIG. 1. User interface 700 includes several user interface elements capable of interaction with the user of a computer system. User interface 700 may be implemented using instructions that are stored on a computer-readable storage medium and executed by a processor.

User interface 700 may be used by a technical user or system administrator. User interface 700 includes window 710. Window 710 may be a window within an enterprise application. For example, window 710 may be a pop-up or notification window that appears after a user has interacted with another element of user interface 700. In one embodiment, window 710 is used to collect settings related to a particular action. Once the settings are submitted to the system, the settings may be saved within a database. The saved settings may be automatically retrieved and applied to a data object when a user initiates a particular action in the future.

Window 710 includes several data elements that are presented to a user of the computer system. The user may be a technical user or system administrator. Data element 720 lists each process that is required to perform an action on a data object. Data element 730 lists dependency information for each process to be completed. The dependency information may be computed based upon the execution of past processes or using an algorithm. Further, the dependency information may be pre-delivered by the software system. In addition, a technical user or system administrator may enter the dependency information. As illustrated, process A is not dependent upon any other processes as denoted by the label "null." Process B is dependent upon process A, process C is dependent upon process B and process D is dependent upon process C. While the dependency information illustrated may only show a single dependency for each of processes B, C and D, it can be appreciated that dependency information may be much more complex. For example, a single process may be dependent upon any number of other processes. In addition, parent processes may depend upon any number of other processes. Further, primary processes can be dependent on other primary processes. The dependency information in general may be used by the scheduling manager and/or the computer system to decide which processes can be parallelized to improve the performance.

Data element 740 includes a set of elements that may be chosen by the user. The set of elements illustrated in data element 740 are used to indicate that a corresponding process is a primary process. As shown, process A has been selected as a primary process. Similarly, data element 750 includes a set of elements that may be used to indicate that a process is a secondary process. As shown, processes B, C and D have been identified as secondary processes. Data elements 740 and 750 may be automatically calculated by the system based upon dependency information from data element 730.

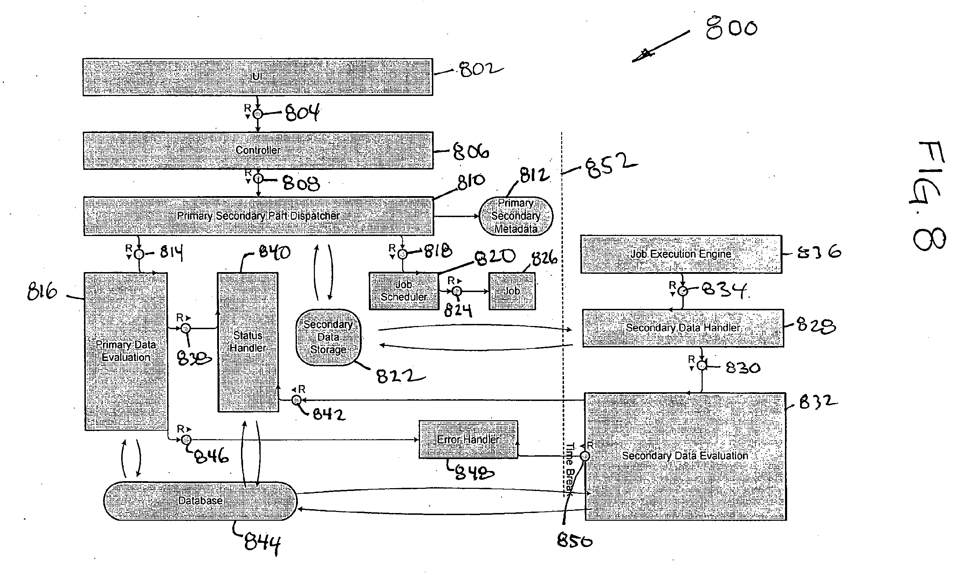

FIG. 8 illustrates a computer system 800 according to an embodiment of the invention. The computer system 800 comprises a user interface 802 which is adapted for receiving data and/or instructions and controls from a user. The user interface 802 is able to send a request 804 to a controller 806. The controller 806 routes the request 804 to the primary and secondary part dispatcher 810. The request 804 is shown as being routed and is also shown as request 808 which has been passed to the primary and secondary part dispatcher 810. The primary and secondary part dispatcher 810 uses a Metadata store 812 to divide the processes which were launched by the request 804, 808 into primary requests and secondary requests.

The user interface 802 corresponds to a user interface means. The controller 806 corresponds to a controller means. The primary and secondary part dispatcher 810 corresponds to a dispatching means. The Metadata store 812 corresponds to a Metadata storage means. After dividing the processes into the primary and secondary processes the primary and secondary part dispatcher 810 sends a request 814 to a primary data evaluation unit 816. The primary data evaluation unit 816 corresponds to a primary evaluation means. The primary data evaluation unit may comprise a processor and/or memory and/or code for executing the processes. A subset of the data associated with the request 804, 808 is also passed to the primary data evaluation unit.

The primary and secondary part dispatcher 810 passes a subset of the data from the request 804, 808 to secondary data storage 822. Secondary data storage 822 corresponds to a buffer means. The subset of the data associated with the secondary processes is stored here until it is needed for the execution of the secondary processes. The primary and secondary part dispatcher 810 also sends a second request 818 to a job scheduler 820. The job scheduler 820 corresponds to a job scheduling means.

The job scheduler 820 then sends a request 824 which is used to create the jobs 826 which will be performed to execute the secondary processes. The secondary data storage 822 is connected to a secondary data handler 828. The secondary data handler 828 may passing the subset of data associated with the secondary processes via a request 830 to a secondary data evaluation unit 832. The secondary data evaluation unit may contain a processor and/or code and/or memory for executing the secondary processes. The secondary data handler 828 is triggered via a request 834 from a job execution engine 836. The job execution engine 836 triggers the job 826. The job may in some embodiments have a small time difference of around 1 second. Essentially the job execution engine 836 starts the secondary data handler 828. The secondary data handler 828 corresponds to a secondary data handler means. The secondary data evaluation unit 832 corresponds to a secondary evaluation means. The job execution engine 836 corresponds to a job execution means.

The primary data evaluation unit 816 is able to send a request 838 to a status handler 840. Similarly the secondary data evaluation unit 832 is also able to send a request 842 to the status handler 840. The status handler 840 corresponds to a status handler means. The status handler means may be enabled for controlling execution of the scheduled secondary processes or jobs 826. The primary data evaluation unit 816, the status handler 840, and the secondary data evaluation unit 832 are able to exchange data and/or perform operations on a database 844. The database 844 corresponds to a database means. The status handler 840 may store, retrieve and/or update status variables which are stored in the database 844. The primary data evaluation unit 816 is able to send a request 846 to an error handler 848. The error handler 848 corresponds to an error handling means. The secondary data evaluation unit 832 is also able to send a request 850 to the error handler.

During operation the primary and secondary requests are executed at different time periods. The dashed line 852 shown in the figure separates the job execution engine 836, the second data handler 828, and the secondary data evaluation unit 832 from the rest of the computer system 800. This is done to emphasize that the secondary processes are performed after the primary processes are finished. Also user control of the user interface 802 is returned to the user before the secondary processes are performed.

It should also be noted that the primary and secondary processes and the data associated with the request 804, 808 may be object based. In this case the method provides a generic method of dividing the processes which are performed by an object into primary and secondary processes which allows a more rapid return of user control to the user interface 802.

The block diagram in FIG. 8 shows:
The UI 802 changes are handed over 804 to the corresponding controller 806, who routes the request 808 to the Primary Secondary Part dispatchter 810, who reads from a metadata store 812 which parts of the data has to be handled as primary and which ones as secondary parts. Afterwards the Dispatcher 810 hands over the primary data 814 to the corresponding Data Evaluation handler816. In case of errors, a error handler 848 will get the corresponding error information 846 to hand it over to the consumer or user. The data 814 coming from the UI 804 will be stored afterward in the database 844. A status handler 840 is updating the object status depending on the consistency of the data and depending of the existence of secondary data. The Primary Secondary Part Dispatcher 810 is storing the secondary data without any evaluation in a special databuffer 822 and triggers 818 the scheduler to create a job 826 to handle the secondary data at a later point in time in a decoupled session which is not influenced by the user.

The Job Execution Engine 836 triggers the job 926 with a small time difference 852 (around 1 second) and starts the registerd Secondary Data Handler 828.This handler 828 is reading the bufferd data from secondary data storage 822 and starts the evaluation of the data. In case of errors, a error handler 848 will get the corresponding error information 850. In case of secondary data the error resolution strategy could be to send out a task to the user or to write the corresponding error into a error log. The secondary data are stored in the database 844 and depending on the evaluation result the Status Handler 840 is triggered to set the corresponding object status.

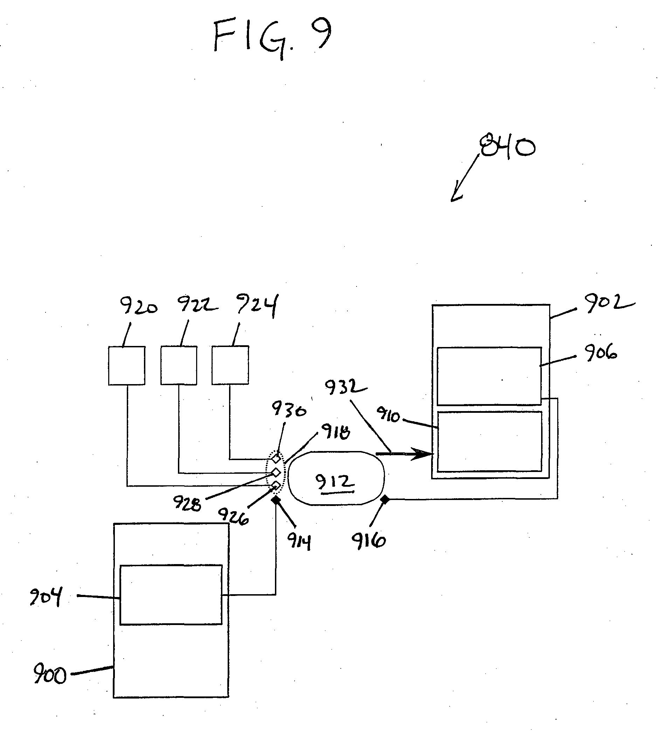

FIG. 9 shows an embodiment of the logic used to operate a status handler 840 according to an embodiment of the invention. FIG. 9 shows boxes that represent the primary processes 900 and the secondary processes 902. The primary processes 900 have associated with them a status variable which indicates if the primary processes 900 are finished processing 904. The secondary processes 902 have a status variable 906 which indicates that the secondary processes have not started processing 906. This is a status variable which indicates that the secondary processes have not started processing yet. The secondary processes 902 also have a status variable which indicates that the processing is finished 910. This status variable 910 is used to indicate if the processing of the secondary processes is finished or not. There is a decision unit 912 which uses logic to send a request 932 or trigger to perform or initiate execution of the secondary processes. For the request or trigger 932 to be send the finished processing status variable 904 has to be fulfilled and this is indicated by the solid box labeled 914. Likewise for the request 932 to be sent the secondary processes must not have been already started before. As a result the not started processing status variable 906 is also a necessary condition 916 for the decision unit 912. Additional logic and/or conditions may be added to the decision unit 912. As an arbitrary example the dashed line 918 shows optional conditions or alternative logic. Essentially any logic rules could be used to define the function of the optional conditions 918 or alternative logic. As an example status variables A 926, B 928 and C 930 are shown. 926 is an optional status variable for status variable A 920, 928 is an optional status variable for status variable 922 and 930 is an optional condition for status variable 924. When the predefined conditions for the decision unit 912 are satisfied then the request 932 or trigger is sent by the status handler 840. After the execution of the secondary processes are finished then the finished processing status variable 910 is set.

Various components of the means of the computer system may be implemented by hardware and/or software. An instance of the various data handlers and job execution engines may be one per session or per transaction. For instance if a user interface is being used then one instance of the data handlers and data evaluation units may be created in some embodiments.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or rewriteable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

It should be noted that the methods described herein do not have to be executed in the order described, or in any particular order. Moreover, various activities described with respect to the methods identified herein can be executed in serial or parallel fashion.

Although specific embodiments have been illustrated and described herein, it should be appreciated that any arrangement calculated to achieve the same purpose may be substituted for the specific embodiments shown. This disclosure is intended to cover any and all adaptations or variations of various embodiments. It is to be understood that the above description has been made in an illustrative fashion, and not a restrictive one. Combinations of the above embodiments, and other embodiments not specifically described herein will be apparent to those of skill in the art upon reviewing the above description. Thus, the scope of various embodiments includes any other applications in which the above compositions, structures, and methods are used.

### List of reference numerals

- 200: user interface
- 210: window
- 220: interface element
- 230: interface element
- 240: button
- 250: button
- 260: button
- 300: object
- 310: primary process
- 320: secondary processes
- 330: process status identifier
- 400: system
- 410: processor
- 420: memory
- 430: display device
- 440: scheduling manager
- 450: error manager
- 600: user interface
- 610: window
- 620: data element
- 630: data element
- 640: data element
- 650: data element
- 700: user interface
- 710: window
- 720: data element
- 730: data element
- 740: data element
- 750: data element
- 800: computer system
- 802: user interface
- 804: request from user interface
- 806: controller
- 808: request from controller
- 810: primary and secondary part dispatcher
- 812: metadata store
- 814: request
- 816: primary data evaluation
- 818: request
- 820: job scheduler
- 822: secondary data stoarge
- 824: request
- 826: job
- 828: secondary data handler
- 830: request
- 832: secondary data evaluation unit
- 834: request
- 836: job execution engine
- 838: request status handler
- 840: status handler
- 842: request
- 844: database
- 846: request
- 848: error handler
- 850: request
- 852: time break
- 900: primary processes
- 902: secondary processes
- 904: finished processing
- 906: not started processing
- 910: finished processing
- 912: decision unit
- 914: necessary condition
- 916: necessary condition
- 918: optional conditions or alternative logic
- 920: status variable A
- 922: status variable B
- 924: status variable C
- 926: optional condition for status variable A
- 928: optional condition for status variable B
- 930: optional condition for status variable C
- 932: request or trigger

## Claims

1. A computer system (400, 800) for the execution of processes (310, 320, 520, 530) comprising:
- user interface means (200, 510, 802) for receiving a request from a user, wherein the request comprises data, wherein the request initiates execution of the processes and disables user control of the user interface means;
- dispatching means (810) for dividing the processes into primary processes (310, 520) and secondary (320, 530) processes;
- primary evaluation means (816) for receiving the primary processes from the dispatching means and for executing (550) the primary processes;
- buffer means (820) for receiving a subset of the data associated with the secondary processes from the dispatching means and for storing the subset of the data;
- job scheduling means (820) for scheduling (555) the execution of the secondary processes, wherein the job scheduling means enables (565) user control of the user interface after scheduling the execution of the secondary processes and after execution of the primary processes;
- status handler means (840) for controlling execution of the scheduled secondary processes;
- secondary evaluation means (832) for reading the subset of the data from the buffer means and for executing (575) the secondary processes; and
- database means (844), wherein the database means is a relational database, wherein the primary and secondary processes comprise instructions for performing operations on the database means, wherein the status handler means enables execution of the scheduled secondary processes by setting the value of a status variable (904), wherein the status variable is stored in the database means, wherein the primary evaluation means is adapted for receiving a primary subset of the data associated with the primary processes from the dispatching means, wherein the dispatching means sends a scheduling request (818) to the scheduling means to request scheduling of the secondary processes, and wherein the computer system further comprises:
- controller means (806) for routing the request to the dispatching means,
- metadata storage means (812) for storing metadata which identifies each of the processes as either a primary process or a secondary process, wherein the metadata specifies each of the processes as being a primary process or a secondary process by specifying process types, wherein the dispatcher uses the metadata to divide the processes into the primary processes and the secondary processes,
- job execution means (836) for triggering the execution of the scheduled secondary processes after a predetermined delay,
- secondary data handler means (828) for reading the data from the buffer means and transferring the data to the secondary evaluation means, and wherein the secondary data handler requests execution of the secondary processes by the secondary evaluation means;
and wherien the primary processes, the secondary processes, and the data are object based.

2. The computer system of claim 1, wherein the computer system further comprises error handling means (848) for receiving an error message from either the primary evaluation means or the secondary evaluation means, wherein the error handling means is adapted for performing a predetermined error resolution strategy upon reception of the error message.

3. The computer system of claim 1 or 2, wherein the computer system further comprises:
- a processor (410) to receive (100) an instruction to perform an action on an object;
- a memory (420); and
- a scheduling manager (440) stored on the memory, wherein the scheduling manager is adapted to:
- identify (110) a set of processes associated with the action to be performed by the system;
- identify (120) a subset of primary processes from the set of processes associated with the action;
- identify (130) a subset of secondary processes from the set of processes associated with the action;
- schedule (140) an asynchronous process to perform the subset of secondary processes on the object;
- direct (150) the processor to perform the subset of primary processes on the object; and
- direct (160) the processor to perform the subset of secondary processes by the asynchronous process based upon the scheduling.

4. The computer system of claim 3, wherein the subset of primary processes and the subset of secondary processes are identified based upon dependency information (812).

5. The computer system of claim 3 or 4, wherein the asynchronous process to perform the subset of secondary processes is scheduled by the scheduling manager based upon system activity.

6. The computer system of claim 3, 4, or 5, wherein the asynchronous process to perform the subset of secondary processes is manually executed based upon received user input.

7. The computer system of claim 5, further comprising instructions that, when executed by the processor, perform the steps of:
- identifying by an error manager a failed process from the set of processes associated with the action to be performed by the system;
- re-scheduling by the scheduling manager the failed process and any processes dependent from the failed process.

8. The computer system of claim 7, wherein the error manager is operable to generate an error message if the failed process is identified a pre-determined number of times during the action to be performed by the system.

9. The computer system of any one of claims 3 through 8, wherein the object includes a follow-up process status identifier.

10. The computer system of claim 9, wherein the follow-up process status identifier is updated by the scheduling manager based upon the status of the primary processes.

11. The computer system of any one of the preceding claims, wherein the computer system further comprises a display, and wherein the user intereface means is a graphical user interface on the display.

## Patentansprüche

1. Computersystem (400, 800) zur Ausführung von Vorgängen (310, 320, 520, 530), das Folgendes umfasst:
- Benutzeroberflächenmittel (200, 510, 802) zum Empfangen einer Anforderung von einem Benutzer, wobei die Anforderung Daten umfasst, wobei die Anforderung die Ausführung der Vorgänge initiiert und die Benutzerkontrolle der Benutzeroberflächenmittel deaktiviert;
- ein Abfertigungsmittel (810) zum Unterteilen der Vorgänge in primäre Vorgänge (310, 520) und sekundäre (320, 530) Vorgänge;
- ein primäres Beurteilungsmittel (816) zum Empfangen der primären Vorgänge von dem Abfertigungsmittel und zum Ausführen (550) der primären Vorgänge;
- ein Zwischenspeichermittel (820) zum Empfangen eines Teilsatzes der Daten, die mit den sekundären Vorgängen assoziiert sind, von dem Abfertigungsmittel und zum Speichern des Teilsatzes der Daten;
- ein Arbeitseinplanungsmittel (820) zum Einplanen (555) der Ausführung der sekundären Vorgänge, wobei das Arbeitseinplanungsmittel die Benutzerkontrolle der Benutzeroberfläche nach dem Einplanen der Ausführung der sekundären Vorgänge und nach der Ausführung der primären Vorgänge aktiviert (565);
- ein Status-Handler-Mittel (840) zum Steuern der Ausführung der eingeplanten sekundären Vorgänge;
- ein sekundäres Beurteilungsmittel (832) zum Lesen des Teilsatzes der Daten von dem Zwischenspeichermittel und zum Ausführen (575) der sekundären Vorgänge und
- ein Datenbankmittel (844), wobei das Datenbankmittel eine relationale Datenbank ist, wobei die primären und die sekundären Vorgänge Anweisungen zum Durchführen von Arbeitsvorgängen auf dem Datenbankmittel umfassen, wobei das Status-Handler-Mittel die Ausführung der eingeplanten sekundären Vorgänge durch Einstellen des Werts einer Statusvariable (904) aktiviert, wobei die Statusvariable in dem Datenbankmittel gespeichert ist, wobei das primäre Beurteilungsmittel zum Empfangen eines primären Teilsatzes der Daten, die mit den primären Vorgängen assoziiert sind, von dem Abfertigungsmittel eingerichtet ist, wobei das Abfertigungsmittel eine Einplanungsanforderung (818) an das Einplanungsmittel sendet, um eine Einplanung der sekundären Vorgänge anzufordern, und wobei das Computersystem weiterhin Folgendes umfasst:
- ein Steuerungsmittel (806) zum Routen der Anforderung zu dem Abfertigungsmittel,
- ein Metadatenspeichermittel (812) zum Speichern von Metadaten, die jeden der Vorgänge als entweder einen primären Vorgang oder einen sekundären Vorgang identifiziert, wobei die Metadaten jeden der Vorgänge als einen primären Vorgang oder einen sekundären Vorgang durch Spezifizieren von Vorgangstypen spezifizieren, wobei der Abfertiger die Metadaten dazu verwendet, die Vorgänge in die primären Vorgänge und die sekundären Vorgänge zu unterteilen,
- ein Arbeitsausführungsmittel (836) zum Auslösen der Ausführung der eingeplanten sekundären Vorgänge nach einer vorherbestimmten Verzögerung,
- ein sekundäres Daten-Handler-Mittel (828) zum Lesen der Daten aus dem Zwischenspeichermittel und Übertragen der Daten an das sekundäre Beurteilungsmittel, und wobei der sekundäre Daten-Handler die Ausführung der sekundären Vorgänge durch das sekundäre Beurteilungsmittel anfordert, und wobei die primären Vorgänge, die sekundären Vorgänge und die Daten objektbasiert sind.

2. Computersystem nach Anspruch 1, wobei das Computersystem weiterhin ein Fehlerhandhabungsmittel (848) zum Empfangen einer Fehlernachricht von entweder dem primären Beurteilungsmittel oder dem sekundären Beurteilungsmittel umfasst, wobei das Fehlerhandhabungsmittel zum Durchführen einer vorherbestimmten Fehlerlösungsstrategie bei Empfang der Fehlernachricht eingerichtet ist.

3. Computersystem nach Anspruch 1 oder 2, wobei das Computersystem weiterhin Folgendes umfasst:
- einen Prozessor (410), um eine Anweisung zum Durchführen einer Aktion an einem Objekt zu empfangen (100) ;
- einen Speicher (420) und
- einen Einplanungsmanager (440), der auf dem Speicher gespeichert ist, wobei der Einplanungsmanager zu Folgendem eingerichtet ist:
- einen Satz von Vorgängen, die mit der von dem System durchzuführenden Aktion assoziiert sind, zu identifizieren (110);
- einen Teilsatz von primären Vorgängen aus dem Satz von Vorgängen, die mit der Aktion assoziiert sind, zu identifizieren (120);
- einen Teilsatz von sekundären Vorgängen aus dem Satz von Vorgängen, die mit der Aktion assoziiert sind, zu identifizieren (130);
- einen asynchronen Vorgang zum Durchführen des Teilsatzes von sekundären Vorgängen an dem Objekt einzuplanen (140);
- den Prozessor zum Durchführen des Teilsatzes von primären Vorgängen an dem Objekt anzuleiten (150) und
- den Prozessor zum Durchführen des Teilsatzes von sekundären Vorgängen durch den asynchronen Vorgang auf der Basis der Einplanung anzuleiten (160).

4. Computersystem nach Anspruch 3, wobei der Teilsatz von primären Vorgängen und der Teilsatz von sekundären Vorgängen auf der Basis von Abhängigkeitsinformationen (812) identifiziert werden.

5. Computersystem nach Anspruch 3 oder 4, wobei der asynchrone Vorgang zum Durchführen des Teilsatzes von sekundären Vorgängen von dem Einplanungsmanager auf der Basis von Systemaktivität eingeplant wird.

6. Computersystem nach Anspruch 3, 4 oder 5, wobei der asynchrone Vorgang zum Durchführen des Teilsatzes von sekundären Vorgängen manuell auf der Basis einer empfangenen Benutzereingabe ausgeführt wird.

7. Computersystem nach Anspruch 5, das weiterhin Anweisungen umfasst, die bei Ausführung durch den Prozessor die folgenden Schritte durchführen:
- Identifizieren eines fehlgeschlagenen Vorgangs aus dem Satz von Vorgängen, die mit der von dem System durchzuführenden Aktion assoziiert sind, durch einen Fehlermanager;
- Neueinplanen des fehlgeschlagenen Vorgangs und von jeglichen Vorgängen, die von dem fehlgeschlagenen Vorgang abhängen, durch den Einplanungsmanager.

8. Computersystem nach Anspruch 7, wobei der Fehlermanager dazu betreibbar ist, eine Fehlernachricht zu erzeugen, wenn der fehlgeschlagene Vorgang eine vorherbestimmte Anzahl von Malen während der von dem System durchzuführenden Aktion identifiziert wird.

9. Computersystem nach einem der Ansprüche 3 bis 8, wobei das Objekt eine Folgevorgangsstatuskennung beinhaltet.

10. Computersystem nach Anspruch 9, wobei die Folgevorgangsstatuskennung von dem Einplanungsmanager auf der Basis des Status der primären Vorgänge aktualisiert wird.

11. Computersystem nach einem der vorhergehenden Ansprüche, wobei das Computersystem weiterhin eine Anzeige umfasst und wobei das Benutzeroberflächenmittel eine grafische Benutzeroberfläche auf der Anzeige ist.

## Revendications

1. Système informatique (400, 800) pour l'exécution de processus (310, 320, 520, 530) comprenant :
- des moyens d'interface utilisateur (200, 510, 802) pour la réception d'une requête en provenance d'un utilisateur, où la requête comprend des données, où la requête initie l'exécution des processus et désactive le contrôle de l'utilisateur des moyens d'interface utilisateur ;
- des moyens de répartition (810) pour la division des processus en processus primaires (310, 520) et en processus secondaires (320, 530) ;
- des moyens primaires d'évaluation (816) pour la réception des processus primaires provenant des moyens de répartition et pour l'exécution (550) des processus primaires ;
- des moyens de tampon (820) pour la réception d'un sous-ensemble de données associé aux processus secondaires en provenance des moyens de répartition et pour le stockage du sous-ensemble de données ;
- des moyens de planification des tâches (820) pour la planification (555) de l'exécution des processus secondaires, où les moyens de planification des tâches autorisent (565) le contrôle de l'utilisateur de l'interface utilisateur après la planification de l'exécution des processus secondaires et après l'exécution des processus primaires ;
- des moyens de gestionnaire d'état (840) pour le contrôle de l'exécution des processus secondaires planifiés ;
- des moyens secondaires d'évaluation (832) pour la lecture du sous-ensemble des données à partir des moyens de tampon et pour l'exécution (575) des processus secondaires ; et
- des moyens de base de données (844), où les moyens de base de données sont une base de données relationnelle, où les processus primaires et secondaires comprennent des instructions pour la réalisation d'opérations sur les moyens de la base de données, où les moyens de gestionnaire d'état autorisent l'exécution des processus secondaires planifiés en fixant la valeur d'une variable d'état (904), où la variable d'état est stockée dans les moyens de la base de données, où les moyens primaires d'évaluation sont adaptés pour la réception d'un sous-ensemble primaire des données associé aux processus primaires en provenance des moyens de répartition, où les moyens de répartition envoient une requête de planification (818) aux moyens de planification pour demander la planification des processus secondaires, et où le système informatique comprend en outre .
- des moyens d'appareil de régulation (806) pour l'acheminement de la requête vers les moyens de répartition,
- des moyens de stockage des métadonnées (812) pour le stockage des métadonnées qui identifient chacun des processus comme étant soit un processus primaire, soit un processus secondaire, où les métadonnées précisent pour chacun des processus s'il est un processus primaire ou un processus secondaire en spécifiant les types de processus, où le répartiteur utilise les métadonnées pour diviser les processus en processus primaires et en processus secondaires,
- des moyens d'exécution des tâches (836) pour le déclenchement de l'exécution des processus secondaires planifiés après un délai prédéterminé,
- des moyens secondaires de gestionnaire d'état (828) pour la lecture des données à partir des moyens de tampon et le transfert des données vers les moyens secondaires d'évaluation, et où le gestionnaire d'état secondaire demande l'exécution des processus secondaires par les moyens secondaires d'évaluation ;
et où les processus primaires, les processus secondaires, et les données reposent sur des objets.

2. Système informatique selon la revendication 1, où le système informatique comprend en outre des moyens de gestion des erreurs (848) pour la réception d'un message d'erreur en provenance soit des moyens primaires d'évaluation, soit des moyens secondaires d'évaluation, où les moyens de gestion des erreurs sont adaptés pour réaliser une stratégie prédéterminée de résolution de l'erreur à la réception du message d'erreur.

3. Système informatique selon les revendications 1 ou 2, où le système informatique comprend en outre :
- un processeur (410) pour recevoir (100) une instruction afin de réaliser une action sur un objet ;
- une mémoire (420) ; et
- un gestionnaire de planification (440) stocké dans la mémoire, où le gestionnaire de planification est adapté pour :
- identifier (110) un ensemble de processus associé à l'action à réaliser par le système ;
- identifier (120) un sous-ensemble de processus primaires à partir de l'ensemble des processus associé à l'action ;
- identifier (130) un sous-ensemble de processus secondaires à partir de l'ensemble des processus associé à l'action ;
- planifier (140) un processus asynchrone pour réaliser le sous-ensemble des processus sur l'objet ;
- ordonner (150) au processeur de réaliser le sous-ensemble des processus primaires sur l'objet ; et
- ordonner (160) au processeur de réaliser le sous-ensemble des processus secondaires par le processus asynchrone sur la base de la planification.

4. Système informatique selon la revendication 3, où le sous-ensemble des processus primaires et le sous-ensemble des processus secondaires sont identifiés sur la base d'une information de dépendance (812).

5. Système informatique selon les revendications 3 ou 4, où le processus asynchrone pour la réalisation du sous-ensemble des processus secondaires est planifié par le gestionnaire de planification sur la base de l'activité du système.

6. Système informatique selon les revendications 3, 4 ou 5, où le processus asynchrone pour la réalisation du sous-ensemble des processus secondaires est exécuté manuellement sur la base de l'entrée utilisateur reçue.

7. Système informatique selon la revendication 5, comprenant en outre des instructions qui, lorsqu'elles sont exécutées par le processeur, réalisent les étapes :
- d'identification par un gestionnaire d'erreur d'un processus défaillant à partir de l'ensemble des processus associé à l'action à réaliser par le système ;
- de nouvelle planification par le gestionnaire d'erreur du processus défaillant et de tout processus dépendant du processus défaillant.

8. Système informatique selon la revendication 7, où le gestionnaire d'erreur est fonctionnel pour générer un message d'erreur si le processus défaillant est identifié un nombre de fois prédéterminé au cours de l'action à réaliser par le système

9. Système informatique selon l'une quelconque des revendications 3 à 8, où l'objet inclut un identifiant d'état du processus de suivi.

10. Système informatique selon la revendication 9, dans lequel l'identifiant d'état du processus de suivi est mis à jour par le gestionnaire de planification sur la base de l'état des processus primaires.

11. Système informatique selon l'une quelconque des revendications précédentes, où le système informatique comprend en outre un écran, et où les moyens d'interface utilisateur sont une interface utilisateur graphique sur l'écran.
